# EUROPÄISCHE PATENTSCHRIFT

(11) **EP 3 521 766 B1**
(45) Veröffentlichungstag und Bekanntmachung des Hinweises auf die Patenterteilung: **30.06.2021**
(21) Anmeldenummer: 19151211.0
(22) Anmeldetag: 10.01.2019
(51) Int. Cl.: G01D 4/00, G01D 9/00, G01D 21/00

(54) **VERFAHREN ZUM GESICHERTEN BETRIEB EINES ELEKTRONISCHEN VERBRAUCHSDATEN-MODULS UND VERBRAUCHSDATEN-MODUL**
METHOD FOR SECURE OPERATION OF AN ELECTRONIC CONSUMPTION DATA MODULE AND CONSUMPTION DATA MODULE
PROCÉDÉ DE FONCTIONNEMENT SÉCURISÉ D'UN MODULE DE DONNÉES DE CONSOMMATION ÉLECTRONIQUE ET MODULE DE DONNÉES DE CONSOMMATION

(30) Priorität: 03.02.2018 DE 102018000889; 14.04.2018 DE 102018003061
(43) Veröffentlichungstag der Anmeldung: 07.08.2019
(73) Patentinhaber: Diehl Metering Systems GmbH, 90451 Nürnberg (DE)
(72) Erfinder: Blank, Thomas, 91732 Merkendorf (DE); Joppich-Dohlus, Petra, 91080 Rathsberg (DE); Schmitz, Stefan, 90455 Nürnberg (DE); Schmidt, Achim, 91367 Weißenohe (DE); Jambor, Christian, 90449 Nürnberg (DE)
(74) Vertreter: Diehl Patentabteilung

(56) Entgegenhaltungen:
- DE-A1-102012 203 518
- DE-A1-102015 107 210

## Beschreibung

Die vorliegende Erfindung betrifft ein Verbrauchsdaten-Modul gemäß dem Oberbegriff des Anspruchs 1. Ferner betrifft die vorliegende Erfindung ein Verfahren zum Betrieb eines elektronischen Verbrauchsdaten-Moduls gemäß dem Oberbegriff des Anspruchs 9.

### Technologischer Hintergrund

Die Datenübertragung von Messeinheiten, wie z. B. Sensoren, Verbrauchsmessern bzw. Verbrauchszählern oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchszählern, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchszähler übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich. Datentelegramme sind in der Regel aus einer Mehrzahl von Datenpaketen aufgebaut. Die SRD- oder ISM-Frequenzbereiche haben den Vorteil, dass diese lizenzfrei sind und für die Nutzung lediglich eine allgemeine Zulassung der Frequenzverwaltung notwendig ist.

Elektronische Verbrauchszähler mit Funksender für drahtlose Datenübertragung werden häufig für eine Walk-In-, Walk-By-, Drive-By- oder Fly-By-Ablesung verwendet. Hierfür werden die Erfassungsgeräte mittels eines mobilen Funkempfängers durch Kundendienstpersonal von einem Fahrzeug aus (Drive-By) im Vorbeifahren oder zu Fuß (Walk-By) im Vorbeigehen abgelesen, ohne dass das Gebäude betreten werden muss. Bei den intelligenten Verbrauchszählern ist zum einen der Energieverbrauch, da diese meist batteriegesteuert sind und möglichst lange Wartungsintervalle aufweisen sollen, und zum anderen die Betriebssicherheit von entscheidender Bedeutung. Bei den obigen Ableseverfahren werden häufig über das ganze Jahr hinweg Funktelegramme ausgesendet, die zur Stromersparnis sehr kurz sind, so dass ein häufiges Senden über einen langen Zeitraum möglich ist.

Zur Erfassung der Verbrauchsdaten werden zunehmend intelligente Messinfrastrukturen eingesetzt. In diesen Messinfrastrukturen (Verbrauchsdatenerfassungssysteme) stellen die Verbrauchszähler die Endgeräte dar, durch die an den Messstellen Verbrauchsdaten aufgenommen werden. Die Messdaten werden digital von den Verbrauchszählern an ein übergeordnetes Managementsystem bzw. Head-End-System übertragen. Das Head-End-System verwaltet die Verbrauchsdaten und kommuniziert mit den Verbrauchszählern. Eine intelligente Messinfrastruktur kann dabei eine große Anzahl an Verbrauchszählern umfassen. Daher ist eine simultane direkte Kommunikationsverbindung von allen Verbrauchszählern zum Head-End-System oft nicht möglich, da nicht ausreichend Kommunikationsmittel zur Verfügung stehen bzw. die Übertragungsbandbreiten zu gering sind. Damit die von den Verbrauchszählern erfassten und versendeten Daten dennoch möglichst sicher und verlustfrei an das Head-End-System übertragen werden können, werden Datensammelvorrichtungen, sogenannte Datensammler, eingesetzt. Die Datensammler werden in der Kommunikationsstrecke zwischen den Verbrauchszählern und dem Head-End-System angeordnet. Dabei sammeln sie auf einem Kommunikationsweg die von den Verbrauchszählern versendeten Verbrauchsdaten und agieren als Zwischenspeicher bis die von ihnen gespeicherten Verbrauchsdaten durch das Head-End-System abgerufen werden. Ferner können die Datensammler zusätzliche Aufgaben übernehmen, wie beispielsweise Statusabfragen bei den Verbrauchszählern durchführen sowie diesen Informationen und Programmcodes, wie beispielsweise Firmware- und Software-Updates sowie Kommunikationszeitpläne, bereitzustellen. In dieser Messinfrastruktur können die Verbrauchszähler per Funk mit Hilfe eines Funkschlüssels konfiguriert werden.

### Nächstliegender Stand der Technik

In der DE 10 2015 107 210 A1 wird ein Verfahren sowie eine Schnittstelleneinrichtung zum Übertragen von Messwerten eines Verbrauchsmengenzählers über eine Funkschnittstelle beschrieben, bei dem unterschiedliche Koppelschlüssel oder Ableseschlüssel für verschiedene Nutzerprofile vorgesehen sind. Im Speicher sind verschiedene Schlüssel für unterschiedliche softwaretechnische Berechtigungen vorgesehen. Im Verbrauchsmengenzähler sind Kommandoautorisierungen als softwaretechnische Berechtigungen festgelegt. So sind verschiedene Ableseschlüssel mit verschiedenen zugeordneten Berechtigungen im Schlüsselspeicher gespeichert. Den Nutzerprofilen können unterschiedliche Zugriffsberechtigungen in der Schnittstelleneinrichtung zugeordnet werden.

Die DE 2012 203 518 A1 beschreibt ein Verfahren zur Kommunikation von energieverbrauchsspezifischen Messdatenelementen von einer Smart Meter Vorrichtung an ein Computersystem eines Energieversorgers und/oder Messstellenbetreibers. Die Vorrichtung weist ein Sicherheitsmodul auf, welches als einzige Kommunikationsschnittstelle der Vorrichtung mit dem Computersystem dient. Die Vorrichtung weist die für ihren Betrieb notwendigen Konfigurationsdaten auf, wobei die Vorrichtung eine Angabe derjenigen Messdatenelemente und/oder Konfigurationsdaten zugeordnet ist, für welche das Computersystem für einen Lesezugriff berechtigt ist.

### Aufgabe der vorliegenden Erfindung

Die Aufgabe der vorliegenden Erfindung besteht darin, ein neuartiges Verfahren zum Betrieb eines Verbrauchsdaten-Moduls sowie ein Verbrauchsdaten-Modul zur Verfügung zu stellen, bei dem bei einer vorteilhaften Energieeffizienz gleichzeitig eine erhöhte Betriebsflexibilität bei verringerter Wartungsintensität ermöglicht wird.

### Lösung der Aufgabe

Die vorstehende Aufgabe wird durch die gesamte Lehre des Anspruchs 1 sowie durch ein Verfahren gemäß Anspruch 9 gelöst. Zweckmäßige Ausgestaltungen der Erfindung sind in den Unteransprüchen beansprucht.

Erfindungsgemäß ist ein Verbrauchsdaten-Modul vorgesehen. Das erfindungsgemäße Verbrauchsdaten-Modul umfasst einen Speicher für Verbrauchsdaten, eine Steuer- und/oder Regeleinheit, Kommunikationsmittel zur Verbrauchsdatenübertragung sowie eine metrologische Messeinheit zur Erfassung der Verbrauchsdaten und einem Modul zur Verwaltung von Schlüsseln für softwaretechnische Berechtigungen, welches als Hardware- und/oder Softwarekomponente ausgebildet ist. Ferner sind verschiedene Schlüssel für unterschiedliche softwaretechnische Berechtigungen vorgesehen, wobei als softwaretechnische Berechtigungen Kommandoautorisierungen im Verbrauchsdaten-Modul festlegt sind, wobei kennzeichnenderweise die metrologische Messeinheit durch eine softwaretechnische Berechtigung geschützt ist. In der metrologischen Messeinheit sind die metrologischen Eigenschaften des Verbrauchsdaten-Moduls hinterlegt. Die metrologischen Eigenschaften können zweckmäßigerweise folgende Eigenschaften einzeln oder in Kombination umfassen: Eichung, Kalibrierung und/oder Justierung. Die softwaretechnischen Berechtigungen umfassen Schreibrechte.

Nebengeordnet ist ein Verfahren zum Betrieb eines elektronischen Verbrauchsdaten-Moduls vorgesehen, wobei die Verbrauchsdaten an einen Empfänger übertragen werden, und verschiedene Schlüssel für unterschiedliche softwaretechnische Berechtigungen vorgesehen sind, wobei als softwaretechnische Berechtigungen Kommandoautorisierungen im Verbrauchsdaten-Modul festlegt sind, umfassend den Schritt:
Empfangen von Kommandos mit einer entsprechenden softwaretechnischen Berechtigung in Form eines Schlüssels, wobei kennzeichnenderweise die metrologischen Eigenschaften des Verbrauchsdaten-Moduls durch eine softwaretechnische Berechtigung geschützt sind. Die metrologischen Eigenschaften können zweckmäßigerweise folgende Eigenschaften einzeln oder in Kombination umfassen: Eichung, Kalibrierung und/oder Justierung. Die softwaretechnischen Berechtigungen umfassen Schreibrecht, umfassend die weiteren Schritte:
Empfangen von einem Kommando mit softwaretechnischen Berechtigungen in Form eines Schlüssels (S₄) mit Schreibrechten für die Änderung der metrologischen Eigenschaften des Verbrauchsdaten-Moduls (1), entsprechende Anpassung mindestens einer der folgenden Eigenschaften: Eichung, Kalibrierung und Justierung.

Das Verbrauchsdaten-Modul ist insbesondere durch ein Verfahren nach mindestens einem der Verfahrensansprüche betreibbar.

In der Verschlüsselungstechnik bzw. in der Kryptographie handelt es sich bei einem Schlüssel um einen variablen Wert, der mit einem Algorithmus verwendet wird, um beispielsweise eine Zeichenfolge zu verschlüsseln bzw. zu entschlüsseln. Ferner werden Schlüssel und/oder Zertifikate zur Authentifizierung, Validierung und/oder Kontrolle privilegierter Zugriffe eingesetzt. Bei den verwendeten Schlüsseln kann es sich z. B. um Schlüssel eines asymmetrischen Verschlüsselungsverfahrens handeln, wie beispielsweise dem RSA-Verfahren. Das RSA-Verfahren kann zum Verschlüsseln und/oder zum digitalen Signieren verwendet werden. Hierbei wird ein Schlüsselpaar verwendet, welches aus einem privaten Schlüssel und einem öffentlichen Schlüssel besteht. Mit dem privaten Schlüssel können Daten entschlüsselt und/oder signiert werden, wohingegen mit dem öffentlichen Schlüssel Daten verschlüsselt werden können und/oder Signaturen überprüft werden können. Der private Schlüssel wird hierfür geheim gehalten. Bei einem Schlüssel kann es sich somit auch um ein Schlüsselpaar handeln. Indem die Kommandoautorisierungen durch die softwaretechnischen Berechtigungen im Verbrauchsdaten-Modul festlegt werden, können durch den Nutzer lediglich Kommandos im Rahmen seiner Berechtigungen ausgeführt werden. Kommandos können beispielsweise Leseanfragen sein, so dass z. B. der Netzversorger Lesezugriff auf detailliertere Daten erhält als der Endverbraucher. Für Kommandos mit Schreibanfragen für Konfigurationswerte, insbesondere für metrologische Eigenschaften, ist es von besonders großer sicherheitstechnischer Bedeutung die softwaretechnischen Berechtigungen hierfür im Verbrauchsdaten-Modul vor der Ausführung zu überprüfen.

Vorteilhafterweise ist das Verfahren für batteriebetriebene, vorzugsweise Langzeit-batteriebetriebene, Verbrauchsdaten-Module geeignet. Verschiedene softwaretechnische Berechtigungen auf einem batteriebetriebenen, insbesondere auf einem eingebetteten System (embedded system), zu realisieren, stellt aufgrund der begrenzten Möglichkeiten des Verbrauchsdaten-Moduls eine besondere Herausforderung dar. Vorteilhafterweise kommt es durch das Verfahren zu keinem Anstieg des Energieverbrauchs im Verbrauchsdaten-Modul.

Verbrauchsmesser besitzen für gewöhnlich eine metrologische Einheit, welche den Durchfluss des Mediums, z. B. Wasser, Strom oder Gas, registriert und gemäß seiner Kalibrierung einen Wert für den Durchfluss ausgibt. Kalibrieren bezeichnet die Ermittlung des Zusammenhangs zwischen den ausgegebenen Werten der metrologischen Einheit und den zugehörigen, durch Normale festgelegten Werten einer Messgröße unter vorgegebenen Bedingungen. Ein Normal ist ein metrologischer Vergleichsgegenstand, ein Vergleichsmaterial oder ein präzises Messgerät, welcher bzw. welches zur Kalibrierung anderer Messgeräte dient. Normale mit der höchsten Genauigkeit sind die sogenannten Primärnormale, welche entsprechend der international gültigen Definition mit der nach dem aktuellen Stand der Technik niedrigsten möglichen Unsicherheit behaftet sind. Einheiten des internationalen Einheitensystems (SI) sind dadurch weltweit einheitlich verfügbar und bilden damit im gesetzlichen Messwesen die gesetzlich verbindliche Grundlage für die entsprechende physikalische Größe. Um die Einhaltung der gesetzlichen Forderungen im geschäftlichen Verkehr sicherzustellen, werden Verbrauchsmesser bzw. deren metrologische Einheiten geeicht. Die Eichung ist die vom Gesetzgeber vorgeschriebene Prüfung auf Einhaltung der zugrunde liegenden eichrechtlichen Vorschriften, wie z. B. der Eichfehlergrenzen. Eichungen werden in der Bundesrepublik Deutschland von den Eichämtern und staatlich anerkannten Prüfstellen durchgeführt. Eine Eichung ist damit eine auf nationale Standards rückführbare gesetzlich vorgeschriebene Kalibrierung des Messgeräts. Bei der Justierung wird ein Eingriff am Verbrauchsdaten-Modul vorgenommen, um diesen auf Sollwerte einzustellen. Mittels eines Normales werden die Sollwerte vorgegeben. Es erfolgt ein Abgleich am Verbrauchsdaten-Modul, beispielsweise über eine Justierschraube oder über elektrische Justiermöglichkeiten. Die Justierung stellt somit einen bleibenden Eingriff im Verbrauchsdaten-Modul dar.

Die metrologischen Eigenschaften des Verbrauchsdaten-Moduls sind vorteilhafterweise in einer metrologischen Einheit im Verbrauchsdaten-Modul hinterlegt. Diese metrologische Einheit kann durch entsprechende Hardware-Gerätesicherung geschützt sein und ist beispielsweise durch das Eichamt versiegelt worden. Der Zugriff auf die metrologischen Eigenschaften des Verbrauchsdaten-Moduls sind vorteilhafterweise nicht mehr ausschließlich durch eine entsprechende Hardware-Gerätesicherung geschützt, sondern können zudem durch softwaretechnische Berechtigungen reguliert werden. Durch softwaretechnische Berechtigungen kann zudem zweckmäßigerweise zwischen einzelnen Nutzern des Verbrauchdatenerfassungsgeräts differenziert werden. Mögliche Nutzergruppen sind z. B. der Endverbraucher, der Messstellenbetreiber, der Netzversorger, der technische Service, der Hersteller und/oder die Eichbehörde.

Erfindungsgemäß umfassen die softwaretechnischen Berechtigungen Schreibrechte. Dadurch besteht die Möglichkeit die Schreibrechte für jeden Nutzer individuell festzulegen. Zweckmäßigerweise bekommt der Endverbraucher beispielsweise keine Schreiberechte für das Verbrauchsdaten-Modul, sondern lediglich Leserechte. Dem Messstellenbetreiber, dem Netzversorger, dem technische Service und/oder der Eichbehörde können Schreibrechte gewährt werden, wobei diese Schreibrechte wiederum in unterschiedlichem Umfang ausgeprägt sein können. Schreibrechte für unkritischere Funktionen wie z. B. die Einstellung der Sendeintervalle der Verbrauchsdaten können mehreren Nutzergruppen eingeräumt werden. Dagegen sind kritische Funktionen wie beispielsweise die Vergabe von softwaretechnischen Berechtigungen an Nutzer nur sehr vertrauenswürdigen Nutzergruppen vorbehalten. Als vertrauenswürdige Nutzergruppen sind beispielsweise der Hersteller und/oder die Eichbehörde zu nennen. Der Zugriff auf die metrologischen Eigenschaften des Verbrauchdaten-Moduls steht zweckmäßigerweise nur den vertrauenswürdigsten Nutzergruppen zur Verfügung.

Zweckmäßigerweise sind als Kommunikationssystem ein Funkkommunikationssystem, ein drahtgebundenes und/oder ein optisches Kommunikationssystem vorgesehen. Die Verwendung softwaretechnischer Berechtigungen ist dabei nicht durch die Art des Kommunikationssystems beschränkt. Der Schlüssel für eine bestimmte Berechtigung, wie beispielsweise für das Löschen von Alarmen, ist unabhängig vom Kommunikationssystem und kann somit über jede beliebige Kommunikationsschnittstelle verwendet werden. Ein optisches Kommunikationssystem kann z. B. für lokale Kommunikationen, d. h. Kommunikationen direkt am Verbrauchsdaten-Modul vorgesehen sein. Ein Funkkommunikationssystem und/oder ein drahtgebundenes System, wie beispielsweise eine M-Bus Schnittstelle, können für Remote-Zugriffe auf das Verbrauchsdaten-Modul verwendet werden. Durch die Möglichkeit eines Remote-Zugriffs per Funk, z. B. über wireless M-Bus, sind erhöhte Sicherheitsanforderungen an das Verbrauchsdaten-Modul zu stellen. Die Verwendung von Funkschlüsseln zur Sicherung der Übertragungen über Funk ist bekannt. Allerdings gewähren die bekannten Funkschlüssel keinen separaten Schutz für die per Funk übertragenen Daten bzw. die Konfigurationsdaten selbst. Zudem werden im Verbrauchsdaten-Modul auszuführende Kommandos nicht speziell autorisiert, so dass bei Kenntnis des Funkschlüssels tendenziell ein Zugriff auf alle Daten und jedes Kommando im Verbrauchsdaten-Modul möglich sein kann.

Vorteilhafterweise kann mindestens ein Schlüssel für die Sicherung der Funkübertragung verwendet werden. Somit kann die Notwendigkeit eines separaten Funkschlüssels entfallen. Die Autorisierung für die Funkübertragung kann z. B. durch den entsprechenden Schlüssel für die softwaretechnischen Berechtigungen erfolgen. Der Schlüssel für die Sicherung der Funkübertragung ist dabei von den bekannten Funkschlüsseln zu unterscheiden, da dieser nicht nur den Zugriff per Funk reguliert, sondern auch den internen Zugriff auf verschiedene Funktionen bzw. tiefere Hierarchieebenen.

Für die Sicherung der Daten bzw. Konfigurationsdaten bei der Funkübertragung kann zweckmäßigerweise auch mindestens ein Schlüssel für die softwaretechnischen Berechtigungen verwendet werden. Konfigurationsdaten bezeichnen jede Art von Daten, welche von einer Anwendung erzeugt und verwaltet werden. Konfigurationsdaten können beispielsweise Profile, Nutzerdaten, Einstellungen, Status und/oder Logs umfassen. Beispielsweise kann der Schlüssel zur Kodierung und Dekodierung einer kryptografischen Verschlüsselungsmethode dienen.

Zweckmäßigerweise kann mindestens ein Schlüssel zur softwaretechnischen Zugriffsberechtigung selektiv einem Informationsempfänger mitgeteilt werden. Der Informationsempfänger kann vorteilhafterweise eine sehr vertrauenswürdige Partei sein. Besonders zweckmäßig ist, wenn der Schlüssel zur softwaretechnischen Zugriffsberechtigung auf die metrologischen Eigenschaften der zuständigen Eichbehörde und/oder einer vergleichbaren neutralen Stelle bekannt ist. Alternativ besteht die Möglichkeit, dass der Schlüssel zur softwaretechnischen Zugriffsberechtigung auf die metrologischen Eigenschaften ausschließlich der zuständigen Eichbehörde und/oder einer vergleichbaren neutralen Stelle bekannt ist. Somit kann auf einfache Weise die eichrechtliche Einhaltung der Kalibrierung im Verbrauchsdaten-Modul gewährleistet werden.

Sofern ein Kommando an das Verbrauchsdaten-Modul übertragen wird, ohne einen für dieses Kommando berechtigenden Schlüssel, wird das Kommando zweckmäßigerweise nicht ausgeführt. Dadurch wird sichergestellt, dass lediglich Kommandos, die von einer vertrauenswürdigen Quelle stammen, ausführbar sind.

Vorteilhafterweise kann das Verbrauchsdaten-Modul bei einem nicht berechtigten Kommando ein Fehlersignal generieren. Wird beispielsweise mit einem nicht berechtigenden Schlüssel auf die metrologischen Eigenschaften das Verbrauchsdaten-Moduls zugegriffen, kann ein Fehler mit der Nachricht, dass keine ausreichende Berechtigung vorliegt, zurückgesendet werden.

Indem ein nicht autorisierter Zugriff auf metrologische Daten registriert und abgespeichert, insbesondere in einem nicht löschbaren Speicher abgespeichert, wird, kann in einfacher Weise eine Manipulation der metrologischen Daten nachgewiesen werden. Bei dem nicht löschbaren Speicher kann es sich beispielsweise um ein eichtechnisches Logbuch handeln. Der nicht autorisierte Zugriff auf metrologische Daten kann vom Verbrauchdaten-Modul angezeigt werden, beispielsweise durch ein Symbol, z. B. ein Waagen-Symbol, im Display und/oder durch ein Statusbit in einem Funktelegramm, aus dem die Manipulation, auch nach langer Zeit, z. B. nach einem Jahr, erkennbar ist.

Zweckmäßigerweise kann das Verbrauchsdaten-Modul eine individuelle Kennung besitzen. Dadurch kann das Verbrauchsdaten-Modul von anderen Verbrauchsdaten-Modulen unterschieden werden.

Aus der Gruppe der Schlüssel kann vorteilhafterweise mindestens ein Schlüssel für eine softwaretechnische Berechtigung bei einer individuellen Kennung eines Verbrauchsdaten-Moduls gültig sein. Bei einem anderen Verbrauchsdaten-Modul mit einer anderen Kennung kann der Schlüssel keine Gültigkeit besitzen, so dass an diesem zweiten Verbrauchsdaten-Modul durch den Schlüssel des ersten Verbrauchsdaten-Moduls keine softwaretechnischen Berechtigungen eingeräumt sind. Die Anzahl möglicher Schlüssel pro Verbrauchsdaten-Modul für softwaretechnische Berechtigungen sind nicht beschränkt.

In einer Ausgestaltung können beispielsweise fünf individuelle Schlüssel pro Verbrauchsdaten-Modul vorgesehen sein. Einer dieser Schlüssel könnte beispielsweise zur Sicherung der Funkübertragung verwendet werden, wobei vier für softwaretechnische Berechtigungen eingesetzt werden.

Bei einer sich häufig wiederholenden Übertragung von Verbrauchsdaten mit demselben Schlüssel, könnte der Schlüssel von einem Angreifer durch eine hinreichend hohe Anzahl an abgehörten Verbrauchsdaten bestimmt werden. Um einem Angriff auf einen Schlüssel vorzubeugen, können zweckmäßigerweise die Gültigkeiten der Schlüssel für softwaretechnische Berechtigungen zeitlich begrenzt sein. Beispielsweise besteht zudem die Möglichkeit, dass einem Schlüssel an verschiedenen Verbrauchsdaten-Modulen softwaretechnische Berechtigungen eingeräumt werden. Der für mehrere Verbrauchsdaten-Module gültige Schlüssel könnte hierfür eine zeitlich begrenzte Gültigkeit aufweisen, so dass der gemeinsame Schlüssel periodisch erneuert wird, beispielsweise einmal im Quartal. Solch eine gemeinsame softwaretechnische Berechtigung könnte ein Uhrendienst sein.

Indem der Umfang der softwaretechnischen Berechtigung für einen Schlüssel individuell konfigurierbar ist, können auf einfache Weise unterschiedlichen Nutzern bzw. Nutzergruppen individuell verschiedene Rechte auf dem Verbrauchsdaten-Modul eingeräumt werden.

Zweckmäßigerweise kann das Verbrauchsdaten-Modul ein Verbrauchszähler oder ein Verbrauchsdaten-Funkmodul sein. Ein Verbrauchdaten-Funkmodul kann beispielsweise ein Funkmodul sein, welches Zählerdaten, insbesondere Verbrauchsdaten überträgt. Im Verbrauchsdaten-Funkmodul sind verschiedene Schlüssel für unterschiedliche softwaretechnische Berechtigungen vorgesehen.

Das Verbrauchsdaten-Modul kann vorteilhafterweise eine Batterie, vorzugsweise eine für einen Langzeit-Betrieb ausgelegte Batterie, umfassen. Das Verbrauchsdaten-Modul kann somit als eingebettetes System (embedded system) unabhängig von einer externen Energiequelle betrieben werden. Um zu gewährleisten, dass das System autark betrieben werden kann und um beispielsweise die notwendigen Wartungsintervalle zu verlängern, kann zweckmäßigerweise eine für den Langzeit-Betrieb ausgelegte Batterie verwendet werden.

Erfindungsgemäß sind in der metrologischen Messeinheit die metrologischen Eigenschaften des Verbrauchsdaten-Moduls hinterlegt. Bekannte Verbrauchsdaten-Module, wie z. B. Verbrauchszähler, schützen den Zugriff auf die metrologische Messeinheit durch einen Hardwareschutz und/oder ein Eichsiegel. Erfindungsgemäß kann der Zugriff auf die metrologische Messeinheit vorteilhafterweise durch einen softwaretechnischen Schutz geschützt sein. Beispielsweise kann weiterhin die Möglichkeit eines hardwaretechnischen Zugriffs neben der Möglichkeit eines softwaretechnischen Zugriffs auf die metrologischen Eigenschaften des Verbrauchsdaten-Moduls bestehen oder der Zugriff auf die metrologische Messeinheit kann ausschließlich durch einen softwaretechnischen Schutz geschützt sein. Der hardwaretechnische Zugang kann z. B. bereits durch die Herstellung unterbunden werden, indem beispielsweise eine hardwaretechnische Umkapselung der metrologischen Messeinheit bei der Produktion stattfindet. Der einzige Zugriff auf die metrologischen Eigenschaften und damit auf die Kalibrierung des Verbrauchsdaten-Moduls kann in dieser Ausgestaltung lediglich über eine softwaretechnische Berechtigung erfolgen.

Das Verbrauchsdaten-Modul kann beispielsweise den Kommunikationsmitteln nachgeschaltet sein und damit den Zugriff auf die übrigen Module des Verbrauchsdaten-Moduls überwachen und steuern. Der Zugriff auf den Speicher, die Steuer- und/oder Regeleinheit bzw. den Prozessor sowie die metrologische Messeinheit kann somit z. B. geregelt werden.

Vorteilhafterweise können die Kommunikationsmittel Funkkommunikationsmittel, drahtgebundene Kommunikationsmittel und/oder optische Kommunikationsmittel umfassen.

Es besteht zudem die Möglichkeit, die Schlüssel für die Sicherung der Funkübertragung zu verwenden. Solche Schlüssel können damit die Funktionen von Funk- bzw. Transportschlüsseln umfassen. Funk- bzw. Transportschlüssel dienen vorrangig zum Schutz des Datentransports über Funkstrecken.

Alternativ oder zusätzlich besteht die Möglichkeit, die Schlüssel für die Sicherung der Konfigurationsdaten zu verwenden. Der Zugriff auf diese Daten in einem Verbrauchsdaten-Modul kann vorteilhafterweise über die Schlüssel zur softwaretechnischen Berechtigung geregelt und verwaltet werden. Beispielweise kann einem Nutzer bzw. einer Nutzergruppe Lese- und/oder Schreibrechte für bestimme Konfigurationsdaten gewährt oder verwehrt werden.

Zweckmäßigerweise besteht die Möglichkeit, den Schlüssel zur softwaretechnischen Zugriffsberechtigung selektiv einem Informationsempfänger mitzuteilen. Der Zugriff mittels Schlüssel zur softwaretechnischen Berechtigung auf die metrologische Messeinheit des Verbrauchsdaten-Moduls kann zweckmäßigerweise der zuständigen Eichbehörde und/oder einer vergleichbaren neutralen Stelle gewährt sein. Alternativ kann der Zugriff ausschließlich der zuständigen Eichbehörde und/oder einer vergleichbaren neutralen Stelle eingeräumt werden.

Vorteilhafterweise kann das Verbrauchsdaten-Modul eine individuelle Kennung besitzen. Durch die individuelle Kennung kann ein Verbrauchsdaten-Modul von anderen Verbrauchsdaten-Modulen unterschieden werden. Sofern bei Funkübertragungen das Verbrauchsdaten-Modul seine Kennung mitsendet, können die von diesem Verbrauchsdaten-Modul stammenden Daten, insbesondere Verbrauchsdaten, dem korrekten Verbrauchsdaten-Modul zugeordnet werden. Im Kommunikationsmodul kann die Kennung hinterlegt sein, wodurch ausgehende Funkübertragungen mit der Kennung versehen werden können. Bei empfangenen Übertragungen kann im Kommunikationsmodul z. B. anhand der mitgesendeten Kennung des Ziel-Verbrauchsdaten-Moduls überprüft werden, ob diese Nachrichten für das jeweilige Verbrauchsdaten-Modul bestimmt sind. Ferner besteht die Möglichkeit, dass das Schlüsselverwaltungsmodul neben dem Schlüssel zur Kommandoautorisierung die mitgesandte Kennung auf Berechtigungen überprüft. Sofern der verwendete Schlüssel nicht für die jeweilige Kennung des Verbrauchsdaten-Moduls autorisiert ist, kann der Schlüssel als ungültig identifiziert werden und z. B. die Kommandoausführung verweigert werden.

Indem die Gültigkeiten der Schlüssel für softwaretechnische Berechtigungen zeitlich begrenzt sind, kann in einfacher Weise die Sicherheit des Verbrauchsdaten-Moduls erhöht werden. Bei Ablauf der Gültigkeit eines Schlüssels kann z. B. ein neuer Schlüssel im Verbrauchsdaten-Modul, beispielsweise im Schlüsselverwaltungsmodul, generiert werden. Beispielsweise kann ein Algorithmus hinterlegt sein, durch den ein neuer gültiger Schlüssel berechnet werden kann. Es besteht z. B. die Möglichkeit ausgehend vom bisher gültigen Schlüssel, einen neuen Schlüssel zu erzeugen. Zusätzlich oder alternativ besteht z. B. die Möglichkeit, einen neuen Schlüssel außerhalb des Verbrauchsdaten-Moduls zu erzeugen, vorzugsweise in einer gesicherten Umgebung. Der so außerhalb des Verbrauchsdaten-Moduls erzeugte Schlüssel kann beispielsweise gesichert auf das Verbrauchsdaten-Modul übertragen werden. Vorausgesetzt, die Instanz außerhalb des Verbrauchsdaten-Moduls verfügt über die nötigen Rechte zur Erzeugung und/oder die nötigen Zugriffsrechte im Verbrauchsdaten-Modul zur Übertragung des neuen Schlüssels.

Vorteilhafterweise kann der Umfang der softwaretechnischen Berechtigung für den Schlüssel individuell konfigurierbar sein. Beispielsweise kann im Schlüsselverwaltungsmodul hinterlegt sein, welcher Schlüssel welche Berechtigungen hat. Somit kann das Schlüsselverwaltungsmodul z. B. entscheiden, welche Anfragen, insbesondere Kommandoanfragen, gewährt oder verweigert werden.

Zweckmäßigerweise kann der Speicher einen nicht löschbaren Speicher umfassen. Der nicht löschbare Speicher kann beispielsweise als eichtechnisches Logbuch ausgestaltet sein.

Vorteilhafterweise kann das Verbrauchsdaten-Modul ein Verbrauchszähler oder Verbrauchsdaten-Funkmodul sein.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung der softwaretechnischen Berechtigungen in zwei Verbrauchsdaten-Modulen;
- Fig. 2: ein stark vereinfachtes Blockschaltbild einer Ausgestaltung des Verbrauchsdaten-Moduls als Verbrauchszähler sowie dessen Komponenten;
- Fig. 3: ein vereinfachtes Flussdiagramm für softwaretechnische Berechtigungen im Verbrauchsdaten-Modul.

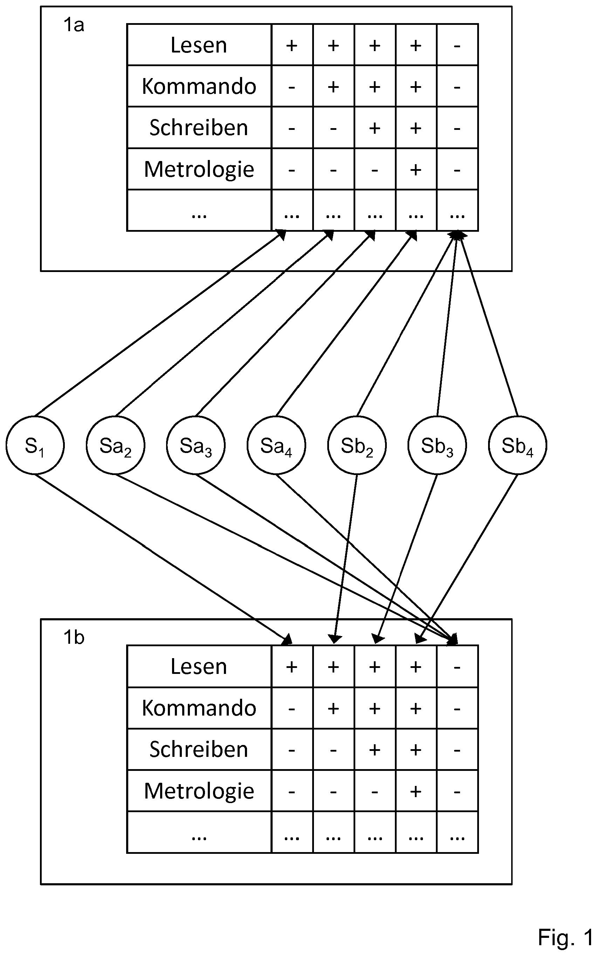

Fig. 1 zeigt eine vereinfachte schematische Darstellung zweier Ausgestaltungen von Verbrauchsdaten-Modulen als Verbrauchszähler 1a - 1b, welche mehrere unterschiedliche softwaretechnische Berechtigungen aufweisen. Beispielhaft sind die softwaretechnischen Berechtigungen "Lesen", "Kommando", "Schreiben" sowie "Metrologie" dargestellt. "Lesen" steht dabei für den Lesezugriff auf die Daten des Verbrauchszählers 1a bzw. 1b. Die lesbaren Daten können Verbrauchsdaten, Konfigurationsdaten und/oder andere Verbrauchszähler-bezogene Daten umfassen. Somit besteht ferner die Möglichkeit weitere Berechtigungsstufen innerhalb des Lesezugriffs auf den Verbrauchszählern 1a - 1b einzurichten. Für den Endverbraucher kann beispielsweise lediglich der Lesezugriff auf die Verbrauchsdaten von Interesse sein. Anhand der Verbrauchsdaten könnte der Endverbraucher seinen Verbrauch anpassen, um gegebenenfalls seine Ausgaben zu verringern. Der Lesezugriff auf die Konfigurationsdaten des Verbrauchszählers 1a - 1b, welche beispielsweise die Sendeintervalle an einen hierarchisch übergeordneten Datensammler umfassen können, kann dagegen für den Endverbraucher von geringem Interesse sein, so dass dem Endverbraucher diese Rechte für gewöhnlich nicht eingeräumt werden können.

Die softwaretechnische Berechtigung "Kommando" steht für Rechte zur Kommandoautorisierung in den Verbrauchszählern 1a - 1b. Die softwaretechnische Berechtigung "Schreiben" steht für Schreibzugriffe auf den Verbrauchszählern 1a - 1b. Innerhalb der Schreibzugriffsrechte kann es wie bei den Lesezugriffsrechten weitere Berechtigungsstufen geben. Ein Schreibrecht in den Konfigurationsdaten des Verbrauchszählers 1a - 1b kann beispielsweise die Sendeintervalle für die Verbrauchsdaten und/oder das Format der Verbrauchsdaten selbst betreffen. "Metrologie" als softwaretechnische Berechtigungsstufe steht in Fig. 1 für die Zugriffsberechtigung auf die metrologischen Eigenschaften des Verbrauchszählers. Die Zugriffsrechte können Leserechte umfassen, welche beispielsweise die Auslesung der aktuellen Kalibrierung des Verbrauchszählers zulassen. Ferner können die Zugriffsrechte Schreibrechte umfassen, welche z. B. Änderungen an der Kalibrierung des Verbrauchszählers erlauben. Solche Eingriffe sind im laufenden Betrieb des Verbrauchszählers nur der zuständigen Eichbehörde und/oder einer vergleichbaren neutralen Stelle vorbehalten. Die Eichbehörde kann durch die Anpassung der Kalibrierung den Verbrauchszähler eichen.

Die Schlüssel S₁ sowie Sa₂ - Sb₄ berechtigen zum Zugriff auf unterschiedliche Funktionen in den Verbrauchszählern 1a - 1b. So ermöglicht S₁ den Lesezugriff in beiden Verbrauchszählern 1a und 1b. Da die Verbrauchszähler 1a - 1b individuelle Kennungen besitzen und die Berechtigungen der Schlüssel Sa₂ - Sb₄ von der individuellen Kennung abhängig sind, erlauben die Schlüssel Sa₂ - Sa₄ keinen Lesezugriff im zweiten Verbrauchszähler 1b. Die Schlüssel Sb₂ - Sb₄ gewähren analog lediglich Zugriff auf den zweiten Verbrauchszähler 1b und nicht auf den ersten Verbrauchszähler 1a. Allerdings verfügen die Schlüssel Sa₂ - Sa₃ zusätzlich über Kommandoautorisierungsrechte bzw. Schreibrechte auf dem Verbrauchszähler 1a. Der Schlüssel S₁ kann beispielsweise für einen Endverbraucher mit mehreren Verbrauchszählern vorgesehen sein, so dass dieser mit einem Schlüssel S₁ beide Verbrauchszähler 1a - 1b auslesen kann. Die Schlüssel Sa₂ und Sa₃ bzw. Sb₂ und Sb₃ können aufgrund der Kommandoautorisierungsrechte bzw. Schreibrechte z. B. für den Messstellenbetreiber, den Netzversorger, den technischen Service und/oder den Hersteller vorgesehen sein kann. Mit dem zusätzlichen Recht "Metrologie" sind die Schlüssel Sa₄ bzw. Sb₄ ausgestattet. Der Nutzer mit dem Schlüssel Sa₄ kann beispielsweise die Kalibrierung der metrologischen Messeinheit 13 des Verbrauchszählers 1a verändern. Diese Eingriffsmöglichkeit in die Kernsysteme des Verbrauchszählers 1a steht nur sehr vertrauenswürdigen Nutzern offen. Für gewöhnlich ist lediglich das zuständige Eichamt bzw. eine vergleichbare neutrale Stelle solch ein vertrauenswürdiger Nutzer.

Die Schlüssel Sa₂ - Sa₄ gewähren somit ausschließlich Zugriff auf Funktionen des ersten Verbrauchszählers 1a, wohingegen die Schlüssel Sb₂ - Sb₄ analog ausschließlich Zugriff auf Funktonen des zweiten Verbrauchszählers 1b ermöglichen. Andererseits sind die Schlüssel Sa₂ - Sa₄ von einem Zugriff auf den zweiten Verbrauchszähler 1b ausgeschlossen sowie die Schlüssel Sb₂ - Sb₄ analog von einem Zugriff auf den ersten Verbrauchszähler 1a.

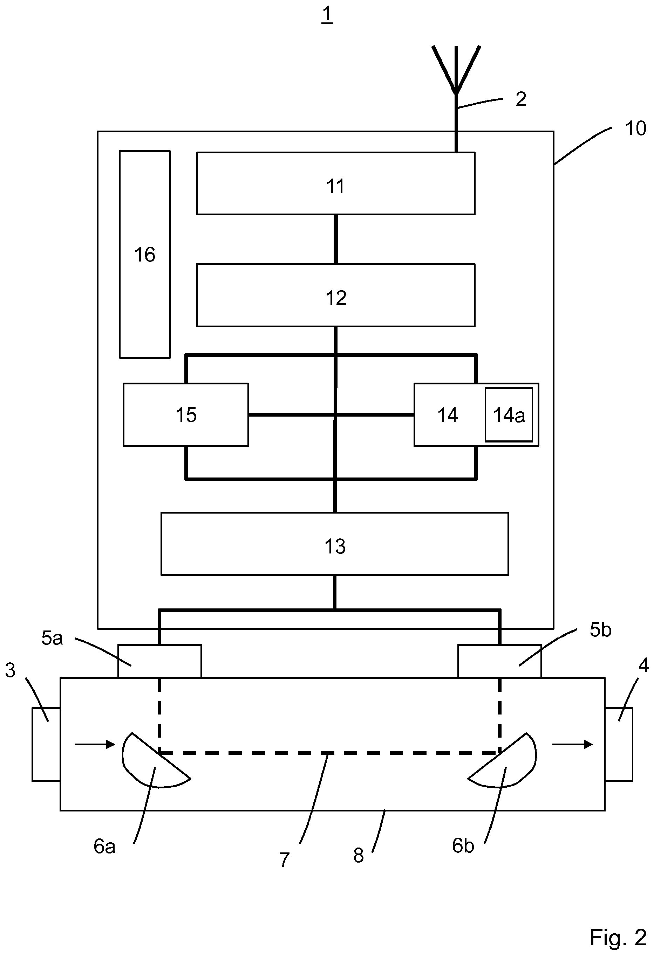

Fig. 2 zeigt ein stark vereinfachtes Blockschaltbild einer Ausgestaltung des Verbrauchsdaten-Moduls als Verbrauchszähler 1. Der Verbrauchszähler 1 umfasst ein Elektronikmodul 10 sowie ein Anschlussgehäuse 8. Das Elektronikmodul 10 umfasst wiederum eine Antenne 2, ein Kommunikationsmodul 11, ein Schlüsselverwaltungsmodul 12, eine metrologische Messeinheit 13, einen Speicher 14, einen Prozessor 15 sowie eine Batterie 16. Bei dem dargestellten Verbrauchszähler 1 handelt es sich um einen Wasserzähler in der Ausgestaltung als Ultraschalldurchflussmesser. Die Ultraschallmessstrecke 7 ist im Anschlussgehäuse 8 untergebracht. Das Anschlussgehäuse 8 weist einen Eingang 3 sowie einen Ausgang 4 für den Wasseranschluss auf. Die Fließrichtung des strömenden Mediums ist mit den Pfeilen am Eingang 3 und Ausgang 4 angezeigt. Die Messeinrichtung des Verbrauchszählers 1 ist beispielhaft mit zwei Ultraschallwandlern 5a bzw. 5b dargestellt. Der Weg der Ultraschallsignale wird an den Reflektoren 6a bzw. 6b zu einer U-förmigen Messstrecke 7 umgelenkt. Ein Teil der Messstrecke 7 verläuft parallel zur Fließrichtung des strömenden Mediums. Die Komponenten im Elektronikmodul 10 sind mit den Komponenten des Anschlussgehäuses 8 über die Verbindung der metrologischen Messeinheit 13 mit den Ultraschallwandlern 5a, 5b gekoppelt. Die metrologische Messeinheit 13 erfasst gemäß der Kalibrierung die Fließgeschwindigkeit bzw. den Volumenstrom des Mediums.

Das Schlüsselverwaltungsmodul 12 ist dem Kommunikationsmodul 11 nachgeschaltet. Anfragen per Funk werden vom Kommunikationsmodul 11 empfangen und an das Schlüsselverwaltungsmodul 12 weitergeleitet. Das Schlüsselverwaltungsmodul 12 überwacht die Schlüssel bzw. die Berechtigungen der Anfragen, welche an den Verbrauchszähler 1 gestellt werden. Der Speicher 14 umfasst einen nicht löschbaren Speicher 14a, welcher hier als eichtechnisches Logbuch ausgestaltet ist. In diesem nicht löschbaren Speicher 14a werden nicht autorisierte Zugriffe auf die metrologischen Daten bzw. Manipulationen und Manipulationsversuche der metrologischen Daten vermerkt und abgespeichert.

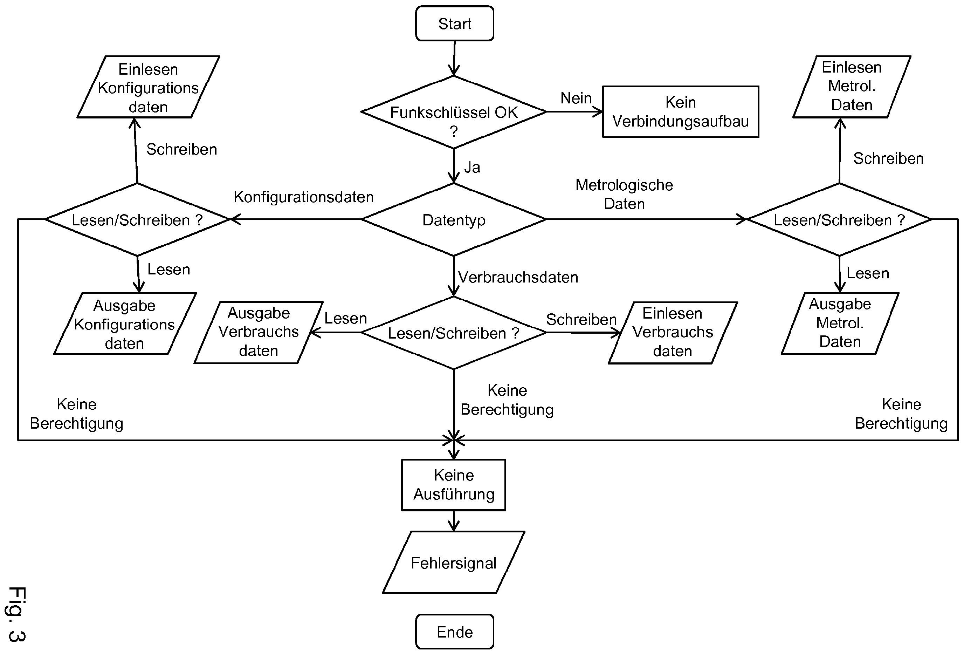

Fig. 3 zeigt ein Flussdiagramm für die softwaretechnischen Berechtigungen in einer Ausgestaltung eines Verbrauchsdaten-Moduls als Verbrauchszähler bei Verwendung verschiedener Schlüssel Si-n. Bei Empfang einer Nachricht per Funk wird im Verbrauchszähler 1 in einem ersten Schritt die Gültigkeit des Funkschlüssels überprüft. Sofern dieser bereits ungültig ist, wird kein Verbindungsaufbau mit der Gegenseite durchgeführt. Bei dem Funkschlüssel kann es sich gleichzeitig um einen Schlüssel S₁₋ₙ für eine softwaretechnische Berechtigung handeln. Abhängig davon, auf welchen Datentyp im Verbrauchszähler 1 zugegriffen werden soll, wird beispielsweise zwischen Verbrauchsdaten, Konfigurationsdaten und metrologischen Daten unterschieden. Verbrauchsdaten sind beispielsweise die erfassten Verbräuche, z. B. das verbrauchte Wasservolumen bei einem Wasserzähler. Konfigurationsdaten können beispielsweise Einstellungen zu Sendeintervallen der Verbrauchsdaten umfassen. Metrologische Daten beschreiben z. B. die Kalibrierung bzw. die Eichung des Verbrauchszählers. In einem nächsten Schritt werden anhand des für die Anfrage verwendeten Schlüssels S₁₋ₙ die Lese- bzw. Schreibrechte für den gewählten Datentyp überprüft. Sofern Leserechte bestehen werden die gewünschten Daten ausgegeben; bei Schreibrechten werden die mitgesandten Daten bzw. Befehle eingelesen. Besteht dagegen keine Berechtigung für den gewünschten Datentyp bzw. nicht die ausreichenden Lese- bzw. Schreibrechte, wird die Anfrage nicht ausgeführt. Sofern dieser Fall eintritt, wird anschließend ein Fehlersignal generiert, welches per Funk zurückgesendet wird.

### BEZUGSZEICHENLISTE

- 1,1a,1b: Verbrauchsdaten-Modul

- 2: Antenne
- 3: Eingang
- 4: Ausgang
- 5a, 5b: Ultraschallwandler
- 6a, 6b: Reflektor
- 7: Messstrecke
- 8: Anschlussgehäuse

- 10: Elektronikmodul
- 11: Kommunikationsmodul
- 12: Schlüsselverwaltungsmodul
- 13: metrologische Messeinheit
- 14: Speicher
- 14a: Nicht löschbarer Speicher
- 15: Prozessor
- 16: Batterie

- S₁₋ₙ: Schlüssel
- S₁: Schlüssel für Leserechte
- S₂: Schlüssel für Kommandoautorisierungen
- S₃: Schlüssel für Schreibrechte
- S₄: Schlüssel für metrologische Eigenschaften
- S₅: Schlüssel zur Sicherung der Funkübertragung
- S₆: Schlüssel zur Sicherung der Konfigurationsdaten

## Patentansprüche

1. Verbrauchsdaten-Modul (1) mit
einem Speicher (14) für Verbrauchsdaten,
einer Steuer- und/oder Regeleinheit (15),
Kommunikationsmittel (11) zur Verbrauchsdatenübertragung,
einer metrologischen Messeinheit (13) zur Erfassung der Verbrauchsdaten und
einem Modul (12) zur Verwaltung von Schlüsseln (S1-n) für softwaretechnische Berechtigungen, welches als Hardware- und/oder Softwarekomponente ausgebildet ist, wobei
verschiedene Schlüssel (S1-n) für unterschiedliche softwaretechnische Berechtigungen vorgesehen sind, und wobei
als softwaretechnische Berechtigungen Kommandoautorisierungen im Verbrauchsdaten-Modul (1) festlegt sind,
**dadurch gekennzeichnet, dass**
in der metrologischen Messeinheit (13) die metrologischen Eigenschaften, welche folgende Eigenschaften einzeln oder in Kombination umfassen: Eichung, Kalibrierung und Justierung, des Verbrauchsdaten-Moduls (1) hinterlegt sind und dass
die metrologischen Eigenschaften in der metrologischen Messeinheit (13) durch eine softwaretechnische Berechtigung, welche Schreibrechte umfasst, geschützt sind.

2. Verbrauchsdaten-Modul (1) nach Anspruch 1, **dadurch gekennzeichnet, dass** das Verbrauchsdaten-Modul (1) eine Batterie (16), vorzugsweise eine für einen Langzeit-Betrieb ausgelegte Batterie, umfasst.

3. Verbrauchsdaten-Modul (1) nach einem der Ansprüche 1 bis 2, **dadurch gekennzeichnet, dass** die Kommunikationsmittel Funkkommunikationsmittel, drahtgebundene Kommunikationsmittel und/oder optische Kommunikationsmittel umfassen, wobei vorzugsweise vorgesehen ist, dass mindestens ein Schlüssel (S5) für die Sicherung der Funkübertragung verwendet wird.

4. Verbrauchsdaten-Modul (1) nach einem der Ansprüche 1 bis 3 **dadurch gekennzeichnet, dass** mindestens ein Schlüssel (S6) im Modul (12) zur Verwaltung von Schlüsseln (S1-n) für softwaretechnische Berechtigungen für die Sicherung der Konfigurationsdaten verwendet wird und/oder dass mindestens ein Schlüssel (S1-n) zur softwaretechnischen Zugriffsberechtigung selektiv einem Informationsempfänger mitgeteilt wird.

5. Verbrauchsdaten-Modul (1) nach einem der Ansprüche 1 bis 4, **dadurch gekennzeichnet, dass** das Verbrauchsdaten-Modul (1) eine individuelle Kennung besitzt.

6. Verbrauchsdaten-Modul (1) nach einem der Ansprüche 1 bis 5, **dadurch gekennzeichnet, dass** die Gültigkeiten der Schlüssel (S1-n) für softwaretechnische Berechtigungen im Modul (12) zur Verwaltung von Schlüsseln (S1-n) für softwaretechnische Berechtigungen zeitlich begrenzt sind und/oder dass der Umfang der softwaretechnischen Berechtigung für einen Schlüssel (S1-n) individuell konfigurierbar ist.

7. Verbrauchsdaten-Modul (1) nach einem der Ansprüche 1 bis 6, **dadurch gekennzeichnet, dass** der Speicher (14) einen nicht löschbaren Speicher (14a) umfasst.

8. Verbrauchsdaten-Modul (1) nach einem der Ansprüche 1 bis 7, **dadurch gekennzeichnet, dass** das Verbrauchsdaten-Modul (1) ein Verbrauchszähler oder ein Verbrauchsdaten-Funkmodul ist.

9. Verfahren zum Betrieb eines elektronischen Verbrauchsdaten-Moduls (1) gemäß mindestens einem der Ansprüche 1 bis 8,
wobei die Verbrauchsdaten über ein Kommunikationssystem an einen Empfänger übertragen werden, und
verschiedene Schlüssel (S₁₋ₙ) für unterschiedliche softwaretechnische Berechtigungen vorgesehen sind, wobei
als softwaretechnische Berechtigungen, welche Schreibrechte umfassen, Kommandoautorisierungen im Verbrauchsdaten-Modul (1) festlegt sind, umfassend den Schritt:
Empfangen von Kommandos mit einer entsprechenden softwaretechnischen Berechtigung in Form eines Schlüssels (S₁₋ₙ),
**dadurch gekennzeichnet, dass** die metrologischen Eigenschaften des Verbrauchsdaten-Moduls (1) durch eine softwaretechnische Berechtigung geschützt sind und folgende Eigenschaften einzeln oder in Kombination umfassen: Eichung, Kalibrierung und Justierung, umfassend die weiteren Schritte:
Empfangen eines Kommandos mit softwaretechnischen Berechtigungen in Form eines Schlüssels (S₄) mit Schreibrechten für die Änderung der metrologischen Eigenschaften des Verbrauchsdaten-Moduls (1),
entsprechende Anpassung mindestens einer der folgenden Eigenschaften: Eichung, Kalibrierung und Justierung.

10. Verfahren nach Anspruch 9, **dadurch gekennzeichnet, dass** als Kommunikationssystem ein Funkkommunikationssystem, ein drahtgebundenes und/oder ein optisches Kommunikationssystem vorgesehen ist, wobei vorzugsweise vorgesehen ist, dass mindestens ein Schlüssel (S₅) für die Sicherung der Funkübertragung verwendet wird.

11. Verfahren nach einem der Ansprüche 9 bis 10, **dadurch gekennzeichnet, dass** mindestens ein Schlüssel (S6) für die Sicherung der Konfigurationsdaten verwendet wird und/oder dass mindestens ein Schlüssel (S1-n) zur softwaretechnischen Zugriffsberechtigung selektiv einem Informationsempfänger mitgeteilt wird.

12. Verfahren nach einem der Ansprüche 9 bis 11, **dadurch gekennzeichnet, dass** ein an das Verbrauchsdaten-Modul (1) übertragenes Kommando ohne einen für dieses Kommando berechtigenden Schlüssel (S1) vom Verbrauchsdaten-Modul (1) nicht ausführbar ist, wobei bevorzugt vorgesehen ist, dass das Verbrauchsdaten-Modul (1) bei einem nicht berechtigten Kommando ein Fehlersignal generiert.

13. Verfahren nach einem der Ansprüche 9 bis 12, **dadurch gekennzeichnet, dass** ein nicht autorisierter Zugriff auf metrologische Daten registriert und abgespeichert, insbesondere in einem nicht löschbaren Speicher abgespeichert, wird.

14. Verfahren nach einem der Ansprüche 9 bis 13, **dadurch gekennzeichnet, dass** das Verbrauchsdaten-Modul (1) eine individuelle Kennung besitzt, wobei vorzugsweise vorgesehen ist, dass aus der Gruppe der Schlüssel mindestens ein Schlüssel (S1-n) für eine softwaretechnische Berechtigung bei einer individuellen Kennung eines Verbrauchsdaten-Moduls (1) gültig ist.

15. Verfahren nach einem der Ansprüche 9 bis 14, **dadurch gekennzeichnet, dass** die Gültigkeiten der Schlüssel (S1-n) für softwaretechnische Berechtigungen zeitlich begrenzt sind und/oder dass der Umfang der softwaretechnischen Berechtigung für einen Schlüssel (S1-n) individuell konfigurierbar ist.

16. Verfahren nach einem der Ansprüche 9 bis 15, **dadurch gekennzeichnet, dass** das Verbrauchsdaten-Modul (1) ein Verbrauchszähler oder ein Verbrauchsdaten-Funkmodul ist.

## Claims

1. Consumption data module (1) having
a memory (14) for consumption data,
a control and/or regulating unit (15),
communication means (11) for consumption data transmission,
a metrological measuring unit (13) for capturing the consumption data, and
a module (12) for managing keys (Sl-n) for software-related authorizations that is in the form of a hardware and/or software component, wherein
there is provision for various keys (Sl-n) for different software-related authorizations, and wherein the software-related authorizations stipulated in the consumption data module (1) are command authorizations, **characterized in that**
the metrological measuring unit (13) holds the metrological properties, which include the following properties individually or in combination: standardization, calibration and alignment, of the consumption data module (1), and **in that** the metrological properties in the metrological measuring unit (13) are protected by a software-related authorization that includes write rights.

2. Consumption data module (1) according to Claim 1, **characterized in that** the consumption data module (1) comprises a battery (16), preferably a battery designed for long-term operation.

3. Consumption data module (1) according to either of Claims 1 and 2,
**characterized in that** the communication means comprise radio communication means, wired communication means and/or optical communication means, there preferably being provision for at least one key (S5) to be used for securing the radio transmission.

4. Consumption data module (1) according to one of Claims 1 to 3,
**characterized in that** at least one key (S6) in the module (12) for managing keys (Sl-n) for software-related authorizations is used for securing the configuration data and/or **in that** at least one key (Sl-n) for software-related access authorization is selectively communicated to an information recipient.

5. Consumption data module (1) according to one of Claims 1 to 4,
**characterized in that** the consumption data module (1) has an individual identifier.

6. Consumption data module (1) according to one of Claims 1 to 5,
**characterized in that** the validities of the keys (Sl-n) for software-related authorizations in the module (12) for managing keys (Sl-n) for software-related authorizations have a time limit and/or **in that** the extent of the software-related authorization for a key (Sl-n) is individually configurable.

7. Consumption data module (1) according to one of Claims 1 to 6,
**characterized in that** the memory (14) comprises a nonerasable memory (14a).

8. Consumption data module (1) according to one of Claims 1 to 7,
**characterized in that** the consumption data module (1) is a consumption meter or a consumption data radio module.

9. Method for operating an electronic consumption data module (1) according to at least one of Claims 1 to 8,
wherein the consumption data are transmitted to a recipient by way of a communication system, and
there is provision for various keys (S₁₋ₙ) for different software-related authorizations, wherein
the software-related authorizations, which include write rights, stipulated in the consumption data module (1) are command authorizations, comprising the step of:
receiving commands with an appropriate software-related authorization in the form of a key (S₁₋ₙ),
**characterized in that** the metrological properties of the consumption data module (1) are protected by a software-related authorization and include the following properties individually or in combination: standardization, calibration and alignment, comprising the further steps of:
receiving a command with software-related authorizations in the form of a key (S₄) with write rights for changing the metrological properties of the consumption data module (1),
appropriate adaptation of at least one of the following properties: standardization, calibration and alignment.

10. Method according to Claim 9,
**characterized in that** the communication system provided is a radio communication system, a wired communication system and/or an optical communication system, wherein there is preferably provision for at least one key (S₅) to be used for securing the radio transmission.

11. Method according to either of Claims 9 and 10,
**characterized in that** at least one key (S6) is used for securing the configuration data and/or **in that** at least one key (Sl-n) for software-related access authorization is selectively communicated to an information recipient.

12. Method according to one of Claims 9 to 11,
**characterized in that** a command transmitted to the consumption data module (1) is not executable by the consumption data module (1) without a key (S1) providing authorization for this command, wherein there is preferably provision for the consumption data module (1) to generate an error signal in the event of an unauthorized command.

13. Method according to one of Claims 9 to 12,
**characterized in that** unauthorized access to metrological data is recorded and stored, in particular stored in a nonerasable memory.

14. Method according to one of Claims 9 to 13,
**characterized in that** the consumption data module (1) has an individual identifier, wherein there is preferably provision for at least one key (Sl-n) for a software-related authorization from the group of keys to be valid for an individual identifier of a consumption data module (1).

15. Method according to one of Claims 9 to 14, **characterized in that** the validities of the keys (Sl-n) for software-related authorizations have a time limit and/or **in that** the extent of the software-related authorization for a key (Sl-n) is individually configurable.

16. Method according to one of Claims 9 to 15, **characterized in that** the consumption data module (1) is a consumption meter or a consumption data radio module.

## Revendications

1. Module de données de consommation (1) comprenant une mémoire (14) destinée à des données de consommation, une unité de commande et/ou de régulation (15),
des moyens de communication (11) destinés à la transmission de données de consommation,
une unité de mesure métrologique (13) destinée à l'enregistrement des données de consommation, et
un module (12) de gestion de clés (Sl-n) destinées à des autorisations logicielles, qui est réalisé sous la forme d'un composant matériel et/ou logiciel, dans lequel différentes clés (Sl-n) sont prévues pour différentes autorisations logicielles, et dans lequel des autorisations de commande sont définies dans le module de données de consommation (1) en tant qu'autorisations logicielles,
**caractérisé en ce que**
les propriétés métrologiques sont stockées dans l'unité de mesure métrologique (13) et comprennent les propriétés suivantes, individuellement ou en combinaison : l'étalonnage, le calibrage et l'ajustement du module de données de consommation (1) sont stockés, et **en ce que** les propriétés métrologiques présentes dans l'unité de mesure métrologique (13) sont protégées par une autorisation logicielle qui comprend des droits d'écriture.

2. Module de données de consommation (1) selon la revendication 1, **caractérisé en ce que** le module de données de consommation (1) comprend une batterie (16), de préférence une batterie conçue pour un fonctionnement à long terme.

3. Module de données de consommation (1) selon l'une quelconque des revendications 1 à 2, **caractérisé en ce que** les moyens de communication comprennent des moyens de communication radio, des moyens de communication filaires et/ou des moyens de communication optiques, dans lequel il est de préférence prévu qu'au moins une clé (S5) soit utilisée pour sécuriser la communication radio.

4. Module de données de consommation (1) selon l'une quelconque des revendications 1 à 3, **caractérisé en ce qu'**au moins une clé (S6) est utilisée dans le module (12) de gestion de clés (Sl-n) destinées à des autorisations logicielles pour la sécurisation des données de configuration et/ou **en ce qu'**au moins une clé (Sl-n) destinée à une autorisation d'accès logicielle est communiquée sélectivement à un destinataire d'informations.

5. Module de données de consommation (1) selon l'une quelconque des revendications 1 à 4, **caractérisé en ce que** le module de données de consommation (1) possède un identifiant individuel.

6. Module de données de consommation (1) selon l'une quelconque des revendications 1 à 5, **caractérisé en ce que** les validités des clés (Sl-n) destinées à des autorisations logicielles dans le module (12) de gestion des clés (Sl-n) destinées à des autorisations logicielles sont limitées dans le temps et/ou **en ce que** la portée de l'autorisation logicielle concernant une clé (Sl-n) est configurable individuellement.

7. Module de données de consommation (1) selon l'une quelconque des revendications 1 à 6, **caractérisé en ce que** la mémoire (14) comprend une mémoire non effaçable (14a) .

8. Module de données de consommation (1) selon l'une quelconque des revendications 1 à 7, **caractérisé en ce que** le module de données de consommation (1) est un compteur de consommation ou un module radio de données de consommation.

9. Procédé de fonctionnement d'un module électronique de données de consommation (1) selon au moins l'une des revendications 1 à 8,
dans lequel les données de consommation sont transmises à un récepteur par l'intermédiaire d'un système de communication, et
différentes clés (S₁₋ₙ) sont prévues pour différentes autorisations logicielles, dans lequel
des autorisations de commande sont définies dans le module de données de consommation (1) en tant qu'autorisations logicielles et comprennent des autorisations d'écriture, comprenant l'étape consistant à :
recevoir des commandes avec une autorisation logicielle correspondante sous la forme d'une clé (S₁₋ₙ),
**caractérisé en ce que** les propriétés métrologiques du module de données de consommation (1) sont protégées par une autorisation logicielle et comprennent les propriétés suivantes, individuellement ou en combinaison : l'étalonnage, le calibrage et l'ajustement, comprenant les étapes supplémentaires consistant à :
recevoir une commande avec des autorisations logicielles sous la forme d'une clé (S₄) présentant des autorisations d'écriture pour modifier les propriétés métrologiques du module de données de consommation (1),
ajuster de manière correspondante au moins l'une des propriétés suivantes : l'étalonnage, le calibrage et l'ajustement.

10. Procédé selon la revendication 9, **caractérisé en ce qu'**il est prévu en tant que système de communication un système de communication radio, un système de communication filaire et/ou un système de communication optique, dans lequel il est de préférence prévu qu'au moins une clé (S5) soit utilisée pour sécuriser la transmission radio.

11. Procédé selon l'une quelconque des revendications 9 à 10, **caractérisé en ce qu'**au moins une clé (S6) est utilisée pour sécuriser les données de configuration et/ou **en ce qu'**au moins une clé (Sl-n) destinée à une autorisation d'accès logicielle est communiquée sélectivement à un récepteur d'informations.

12. Procédé selon l'une quelconque des revendications 9 à 11, **caractérisé en ce qu'**une commande transmise au module de données de consommation (1) ne peut pas être exécutée par le module de données de consommation (1) sans une clé (S1) autorisant cette commande, dans lequel il est de préférence prévu que le module de données de consommation (1) génère un signal d'erreur en cas de commande non autorisée.

13. Procédé selon l'une quelconque des revendications 9 à 12, **caractérisé en ce qu'**un accès non autorisé à des données métrologiques est enregistré et mémorisé, notamment dans une mémoire non effaçable.

14. Procédé selon l'une quelconque des revendications 9 à 13, **caractérisé en ce que** le module de données de consommation (1) possède un identifiant individuel, dans lequel il est de préférence prévu que, dans le groupe de clés, au moins une clé (Sl-n) destinée à une autorisation logicielle soit valable pour un identifiant individuel d'un module de données de consommation (1).

15. Procédé selon l'une quelconque des revendications 9 à 14, **caractérisé en ce que** les validités des clés (S1-n) destinées à des autorisations logicielles sont limitées dans le temps et/ou **en ce que** la portée de l'autorisation logicielle concernant une clé (Sl-n) est configurable individuellement.

16. Procédé selon l'une quelconque des revendications 9 à 15, **caractérisé en ce que** le module de données de consommation (1) est un compteur de consommation ou un module radio de données de consommation.
